# EUROPÄISCHE PATENTSCHRIFT

(11) **EP 1 964 429 B1**
(45) Veröffentlichungstag und Bekanntmachung des Hinweises auf die Patenterteilung: **07.07.2010**
(21) Anmeldenummer: 06819948.8
(22) Anmeldetag: 12.12.2006
(51) Int. Cl.: H04W 48/18

(54) **ANORDNUNG MIT EINEM MOBILFUNKNETZ SOWIE MIT MINDESTENS EINEM MOBILEN ENDGERÄT, VERFAHREN ZUM BETREIBEN EINER SOLCHEN ANORDNUNG UND STEUEREINRICHTUNG**
ASSEMBLY COMPRISING A CELLULAR NETWORK AND AT LEAST ONE MOBILE TERMINAL, METHOD FOR THE OPERATION OF SUCH AN ASSEMBLY AND CONTROL DEVICE
DISPOSITIF PRESENTANT UN RESEAU DE RADIOTELEPHONIE MOBILE ET AU MOINS UN TERMINAL MOBILE, PROCEDE PERMETTANT DE FAIRE FONCTIONNER UN TEL DISPOSITIF ET DISPOSITIF DE COMMANDE

(30) Priorität: 13.12.2005 DE 102005060634
(43) Veröffentlichungstag der Anmeldung: 03.09.2008
(73) Patentinhaber: Nokia Siemens Networks GmbH & Co. KG, 81541 München (DE)
(72) Erfinder: FAN, Changpeng, 10557 Berlin (DE)
(86) Internationale Anmeldenummer: PCT/EP2006/069590
(87) Internationale Veröffentlichungsnummer: WO 2007/068691

(56) Entgegenhaltungen:
- WO-A-99/49690
- WO-A-2006/048760
- US-A1- 2004 142 693
- US-A1- 2004 203 732
- US-A1- 2005 227 692

## Beschreibung

Die Erfindung betrifft eine Anordnung mit einem Mobilfunknetz, das ein Kernnetz und mehrere Zugangsnetze zur Anbindung mobiler Endgeräte an das Kernnetz aufweist, sowie mit mindestens einem mobilen Endgerät.

US 2005/227692 A1 betrifft ein Netzwerkauswahlverfahren, wobei ein mobiles Endgerät während eines Gesprächs mit einem Teilnehmer ein Netzwerk aus einer Vielzahl von Netzwerken selektiert, falls sich die Verbindung verschlechtert oder ein weiteres Netzwerk entdeckt wird. Der Fortbestand der Verbindung zwischen den Gesprächspartnern wird sichergestellt, indem ein Netzwerk unter Aufsicht des Serversystems ausgewählt wird.

Im Zusammenhang mit Mobilfunknetzen der so genannten dritten Generation ist es üblich, dass ein Mobilfunknetz zur Anbindung mobiler Endgeräte über mehrere Zugangsnetze verfügt, welche mit einem so genannten Kernnetz des Mobilfunknetzes verbunden sind. Die Begriffe des Zugangsnetzes ("Access Network") und des Kernnetzes ("Mobile Core Network") sind dem Fachmann auf dem Gebiet des Mobilfunks allgemein bekannt. So beinhaltet das Kernnetz insbesondere vermittlungstechnische beziehungsweise netzorientierte Funktionen und Vorrichtungen, wie beispielsweise Vermittlungsstellen und Heimatdatenbanken. Demgegenüber umfassen Zugangsnetze insbesondere den funkbezogenen Teil eines Mobilfunknetzes, d. h. hierbei handelt es sich insbesondere um das Basisstationssystem. Bei einem mobilen Endgerät kann es sich beispielsweise um ein Mobilfunktelefon, einen mobilen Computer ("Notebook") , einen so genannten PDA (Personal Digital Assistant) mit einer Funkschnittstelle oder auch um ein Funkmodul handeln. Funkmodule werden zur Herstellung einer Kommunikationsverbindung über ein Kommunikationsnetz in Form eines Mobilfunknetzes in verschiedensten Bereichen, wie beispielsweise für Anwendungen im so genannten Maschine-zu-Maschine (Machine-to-Machine, M2M) Umfeld oder zur Unterstützung von Anwendungen im Bereich der Telematik, verwendet.

Bei einem Zugangsnetz kann es sich beispielsweise um ein solches nach dem GPRS (General Packet Radio Service) oder dem UMTS (Universal Mobile Telecommunication System)-Standard handeln. Üblicherweise überlappen verschiedene Zugangsnetze ganz oder teilweise hinsichtlich ihrer geographischen Abdeckung, d. h. an einem bestimmten geografischen Ort stehen einem mobilen Endgerät häufig mehrere Zugangsnetze für die Nutzung von Mobilfunkdiensten zur Verfügung. Dabei kann es sich um verschiedene Zugangsnetze eines Netzbetreibers (welche im Rahmen der vorliegenden Erfindung zusammen mit einem mit ihnen verbundenen Kernnetz als Mobilfunknetz bezeichnet werden) oder aber auch um Zugangsnetze unterschiedlicher Netzbetreiber handeln.

Die durchschnittliche Anzahl der an einem geografischen Ort verfügbaren Zugangsnetze wird sich durch zukünftige Generationen von Funkstandards (d. h. insbesondere solchen jenseits der dritten Mobilfunkgeneration), welche zur Bereitstellung immer leistungsfähigerer Zugangsnetze führen, weiter erhöhen. In einer solchen Umgebung ist es von hoher Bedeutung, wie für ein mobiles Endgerät die Auswahl eines der zur Verfügung stehenden Zugangsnetze erfolgt. Dabei ist eine solche Auswahl sowohl beim erstmaligen Einbuchen des mobilen Endgerätes in das Mobilfunknetz über eines der Zugangsnetze nach dem Einschalten des mobilen Endgerätes als auch unter bestimmten Umständen, wie beispielsweise bei einer Verschlechterung der Übertragungsqualität des aktuell verwendeten Zugangsnetzes, zu späteren Zeitpunkten erforderlich. Ein Wechsel des mobilen Endgerätes von einem zu einem anderen Zugangsnetz wird allgemein auch als "Handover" bezeichnet. Dabei ist es neben der Auswahl des zu verwendenden Zugangsnetzes darüber hinaus erforderlich festzulegen, mit welchem Protokoll bzw. welcher Protokollschicht der Handover erfolgen soll.

Normalerweise erfolgt die Auswahl eines der zur Verfügung stehenden Zugangsnetze unter Berücksichtigung bestimmter Gesichtspunkte bzw. Kriterien. So ist es im Allgemeinen für ein mobiles Endgerät bzw. dessen Nutzer erstrebenswert, jederzeit die unter den jeweiligen Umständen bestmögliche Verbindung zu nutzen, d. h. eine Auswahl des Zugangsnetzes unter maßgeblicher Berücksichtigung der Qualität der Verbindung zu treffen. Neben der Übertragungsqualität kann eine Vielzahl weiterer Kriterien einen Einfluss darauf haben, welches aus Sicht des mobilen Endgerätes (bzw. dessen Nutzers) das bevorzugte Zugangsnetz darstellt. Beispiele hierfür sind die Kosten für ein Gespräch oder eine Datenübertragung, allgemeine Präferenzen des Nutzers oder Eigenschaften des mobilen Endgerätes.

Dem hingegen ist aus Sicht des Mobilfunknetzes bzw. seines Netzbetreibers möglicherweise eine Auswahl des von einem mobilen Endgerät zu verwendenden Zugangsnetzes nach anderen Kriterien wie beispielsweise einer Optimierung der Nutzung der zur Verfügung stehenden Übertragungsressourcen sinnvoll. So ist es im Einzelfall durchaus denkbar, dass das aus Sicht des mobilen Endgerätes (bzw. dessen Nutzers) in einer bestimmten Situation bevorzugte Zugangsnetz und das aus Sicht des Mobilfunknetzes (bzw. dessen Netzbetreibers) bevorzugte Zugangsnetz nicht übereinstimmen.

Der vorliegenden Erfindung liegt daher die Aufgabe zugrunde, eine Anordnung anzugeben, bei der das Auswählen eines von einem mobilen Endgerät zu verwendenden Zugangsnetzes auf flexible und dynamische Art und Weise gesteuert werden kann.

Diese Aufgabe wird erfindungsgemäß gelöst durch eine Anordnung mit einem Mobilfunknetz, das ein Kernnetz und mehrere Zugangsnetze zur Anbindung mobiler Endgeräte an das Kernnetz aufweist, sowie mit mindestens einem mobilen Endgerät, wobei das mobile Endgerät eine endgerätseitige Entscheidungseinrichtung zum Auswählen des von dem mobilen Endgerät zu verwendenden Zugangsnetzes und das Mobilfunknetz eine netzseitige Entscheidungseinrichtung zum Auswählen des von dem mobilen Endgerät zu verwendenden Zugangsnetzes sowie eine Steuereinrichtung zum Steuern der endgerätseitigen und der netzseitigen Entscheidungseinrichtung aufweist, wobei das Kernnetz und/oder mindestens eines der Zugangsnetze mindestens eine weitere durch die Steuereinrichtung steuerbare Entscheidungseinrichtung aufweist bzw. aufweisen, wobei die weitere Entscheidungseinrichtung eine Entscheidungseinrichtung zum Auswählen des von dem mobilen Endgerät zu verwendenden Zugangsnetzes ist.

Die erfindungsgemäße Anordnung ist bevorzugt, da sie es ermöglicht, flexibel und dynamisch festzulegen, ob Entscheidungen hinsichtlich der Auswahl des Zugangsnetzes durch das jeweilige mobile Endgerät oder durch das Mobilfunknetz getroffen werden sollen. Die grundsätzliche Flexibilität, dass Entscheidungen sowohl auf Seiten des mobilen Endgerätes als auch auf Seiten des Mobilfunknetzes getroffen werden können, ist dabei dadurch gegeben, dass das mobile Endgerät eine endgerätseitige Entscheidungseinrichtung und das Mobilfunknetz eine netzseitige Entscheidungseinrichtung aufweisen, welche beide jeweils zum Auswählen des von dem mobilen Endgerät zu verwendenden Zugangsnetzes ausgebildet sind. Darüber hinaus sind die Entscheidungseinrichtungen vorzugsweise auch jeweils in der Lage festzulegen, mittels welches Protokolls bzw. welcher Protokollschicht die Verbindung zu dem ausgewählten Zugangsnetz aufgebaut werden soll. Die Steuereinrichtung, welche sowohl zur Steuerung der endgerätseitigen als auch zur Steuerung der netzseitigen Entscheidungseinrichtung ausgebildet ist, ermöglicht es, dass in flexibler und dynamischer Art und Weise festgelegt werden kann, welche der beiden Entscheidungseinrichtungen die Auswahl eines der zur Verfügung stehenden Zugangsnetze vornehmen soll. Dabei können beispielsweise die Auslastung des Mobilfunknetzes bzw. seiner Zugangsnetze oder auch mögliche Störungen berücksichtigt werden. Darüber hinaus kann beispielsweise den mobilen Endgeräten von Nutzern mit hohen Umsätzen eine freie Auswahl des zu verwendenden Zugangsnetzes gestattet werden, während für die mobilen Endgeräte der übrigen Nutzer eine netzseitige Auswahl des zu verwendenden Zugangsnetzes erfolgt.

Dabei ist zu beachten, dass generell sowohl die Verwendung der netzseitigen als auch die Verwendung der endgerätseitigen Entscheidungseinrichtung zum Auswählen des von dem mobilen Endgerät zu verwendenden Zugangsnetzes Vor- und Nachteile aufweist. So verfügt ein mobiles Endgerät im Vergleich zu dem Mobilfunknetz beispielsweise lediglich über eingeschränkte Informationen, insbesondere hinsichtlich der Gesamtsituation des Mobilfunknetzes. Daher sollte das Mobilfunknetz im Allgemeinen eher als das mobile Endgerät in der Lage sein, Entscheidungen zu treffen, die dem Gesamtsystem bestehend aus dem Mobilfunknetz und dem mobilen Endgerät (bzw. einer Vielzahl von mobilen Endgeräten) nutzen. Allerdings weist das Auswählen des zu verwendenden Zugangsnetzes durch die netzseitige Entscheidungseinrichtung den Nachteil auf, dass die netzseitige Entscheidungseinrichtung in diesem Fall entsprechende Entscheidungen für eine Vielzahl von mobilen Endgeräten treffen muss. Somit besteht die Gefahr, dass die netzseitige Entscheidungseinrichtung zu einem Engpass des Mobilfunknetzes wird. In diesem Fall kann aufgrund der hohen Last der netzseitigen Entscheidungseinrichtung und der zu erwartenden Verzögerung bei der Übertragung der Entscheidung von der netzseitigen Entscheidungseinrichtung an die mobilen Endgeräte die Auswahl des Zugangsnetzes unnötigerweise verzögert werden. Aufgrund ihrer Flexibilität vermeidet die erfindungsgemäße Anordnung vorteilhafterweise die Nachteile einer starren endgerätseitigen oder netzseitigen Auswahl des zu verwendenden Zugangsnetzes. Vorzugsweise ist es dabei auch möglich, dass die Steuereinrichtung die endgerätseitige und die netzseitige Entscheidungseinrichtung anweist, miteinander zu kommunizieren und gemeinsam das zu verwendende Zugangsnetz auszuwählen.

Da das Kernnetz und/oder mindestens eines der Zugangsnetze mindestens eine weitere durch die Steuereinrichtung steuerbare Entscheidungseinrichtung aufweist bzw. aufweisen kann, ist es möglich netzseitig eine Vielzahl von Entscheidungseinrichtungen einzuführen und diese beispielsweise in einer baumartigen Hierarchie anzuordnen. So besteht beispielsweise die Möglichkeit, dass im Normalfall Entscheidungseinrichtungen der jeweiligen Zugangsnetze die Auswahl des für das mobile Endgerät zu verwendenden Zugangsnetzes vornehmen. Sofern unter bestimmten Umständen eine zentralere Steuerung gewünscht ist, so können die Entscheidungseinrichtungen der Zugangsnetze ebenso wie die endgerätseitige Entscheidungseinrichtung von der Steuereinrichtung deaktiviert und gleichzeitig eine zentrale, in der Hierarchie übergeordnete Entscheidungseinrichtung beispielsweise im Kernnetz aktiviert werden.

Allgemein sei darauf hingewiesen, dass es sich sowohl bei den Entscheidungseinrichtungen als auch bei der Steuereinrichtung um logische Komponenten handelt. Dies bedeutet, dass diese Einrichtungen durch ihre Funktion definiert sind und nicht notwendigerweise in Form separater Hardware wie beispielsweise eines speziellen Netzknotens oder eines separaten elektronischen Logikbausteins realisiert sein müssen. Stattdessen kann die entsprechende Funktion beispielsweise der Steuereinrichtung beispielsweise als zusätzliche Funktion eines vorhandenen Netzknotens implementiert oder beispielsweise auch über mehrere Netzknoten verteilt werden.

Vorzugsweise ist die erfindungsgemäße Anordnung derart ausgestaltet, dass die netzseitige Entscheidungseinrichtung und/oder die Steuereinrichtung vollständig oder teilweise im Kernnetz des Mobilfunknetzes angeordnet sind. Diese Ausführungsform ist vorteilhaft, da das Kernnetz die zentrale Komponente des Mobilfunknetzes darstellt und somit besonders geeignet für die Realisierung der netzseitigen Entscheidungseinrichtung und der Steuereinrichtung ist. Vorzugsweise können die netzseitige Entscheidungseinrichtung und die Steuereinrichtung dabei in Form einer gemeinsamen Komponente im Kernnetz realisiert werden.

In einer bevorzugten Ausführungsform kann die erfindungsgemäße Anordnung auch so ausgebildet sein, dass die endgerätseitige und/oder die netzseitige Entscheidungseinrichtung zum Auswählen des von dem mobilen Endgerät zu verwendenden Zugangsnetzes anhand von programmierbaren bzw. konfigurierbaren Regeln ausgebildet ist bzw. sind. Dies ist vorteilhaft, da mittels programmierbarer bzw. konfigurierbarer Regeln auf einfache und flexible Art und Weise festgelegt werden kann, welches der zur Verfügung stehenden Zugangsnetze in einer jeweiligen Situation ausgewählt werden soll. Darüber hinaus kann hierdurch vorteilhafterweise auf Änderungen der Netzbedingungen oder beispielsweise auch auf die Bereitstellung eines neuen Zugangsnetzes schnell und flexibel reagiert werden.

Die erfindungsgemäße Anordnung kann vorteilhafterweise auch derart ausgestaltet sein, dass die Steuereinrichtung zur Steuerung der netzseitigen und der endgerätseitigen Entscheidungseinrichtung anhand von programmierbaren bzw. konfigurierbaren Regeln ausgebildet ist. Die Steuerung der netzseitigen und der endgerätseitigen Entscheidungseinrichtung durch die Steuereinrichtung anhand von programmierbaren bzw. konfigurierbaren Regeln ist bevorzugt, da somit auf einfache Art und Weise Regeln geändert oder neu hinzugefügt werden können und damit das Verhalten der Steuereinrichtung an geänderte Anforderungen flexibel angepasst werden kann. Dies ermöglicht insbesondere auch eine dynamische Berücksichtigung von Änderungen der Netzbedingungen. Dabei können einzelne Regeln entweder für alle oder auch nur für bestimmte mobile Endgeräte gültig sein. Des Weiteren können beispielsweise Regeln nach geographischen oder zeitlichen Kriterien erstellt werden.

Vorzugsweise kann die erfindungsgemäße Anordnung auch derart ausgeprägt sein, dass die Steuereinrichtung zum Übermitteln von Aktivierungs- bzw. Deaktivierungssignalen an die endgerätseitige und/oder netzseitige Entscheidungseinrichtung ausgebildet ist. Diese Ausführungsform ist bevorzugt, da sie es der Steuereinrichtung jederzeit ermöglicht, die endgerätseitige und/oder die netzseitige Entscheidungseinrichtung zu aktivieren bzw. zu deaktivieren. Somit kann die Steuereinrichtung generell festlegen, ob die Auswahl eines Zugangsnetzes endgerätseitig oder netzseitig erfolgen soll.

In einer weiteren bevorzugten-Ausführungsform der erfindungsgemäßen Anordnung ist bzw. sind die endgerätseitige und/oder die netzseitige Entscheidungseinrichtung zum Auswählen des von dem mobilen Endgerät zu verwendenden Zugangsnetzes bei bestehender Anbindung des mobilen Endgerätes an eines der Zugangsnetze ausgebildet. Diese Ausführungsform ist bevorzugt, da sie für den Fall, dass das mobile Endgerät bereits mittels eines Zugangsnetzes in das Mobilfunknetz eingebucht ist, die Auswahl eines weiteren der zur Verfügung stehenden Zugangsnetze ermöglicht. Dies kann beispielsweise dann der Fall sein, wenn das mobile Endgerät aufgrund eines Ortswechsels den Bereich des aktuell genutzten Zugangsnetzes verlässt. Darüber hinaus kann ein Wechsel des Zugangsnetzes jedoch auch durch verschiedene andere Ereignisse ausgelöst werden, wie beispielsweise eine wetterbedingte Änderung der Netzbedingungen oder die Nutzung eines bestimmten Dienstes durch das mobile Endgerät, welcher ein anderes Zugangsnetz erforderlich oder wünschenswert macht. Es sei darauf hingewiesen, dass als Ergebnis des Auswählens des zu verwendenden Zugangsnetzes grundsätzlich auch eine Bestätigung des aktuell bereits verwendeten Zugangsnetzes stehen kann. Dies kann etwa dann geschehen, wenn aus Sicht der betreffenden Entscheidungseinrichtung in der betreffenden Situation ein Wechsel des Zugangsnetzes keine Vorteile bringt bzw. aus bestimmten Gründen nicht möglich ist.

Die erfindungsgemäße Anordnung ist vorzugsweise derart ausgestaltet, dass die endgerätseitige und/oder die netzseitige Entscheidungseinrichtung zum Auswählen des von dem mobilen Endgerät zu verwendenden Zugangsnetzes bei Einschalten des mobilen Endgerätes ausgebildet ist bzw. sind. Hierdurch wird es vorteilhafterweise ermöglicht, dass auch bei Einschalten des mobilen Endgerätes, d. h. in einer Situation, in der das mobile Endgerät noch in keinem der zur Verfügung stehenden Zugangsnetze eingebucht ist, die endgerätseitige bzw. die netzseitige Entscheidungseinrichtung eine Auswahl des zu verwendenden Zugangsnetzes vornehmen.

In einer weiteren bevorzugten Ausführungsform der erfindungsgemäßen Anordnung ist die Steuereinrichtung mit einer weiteren Steuereinrichtung eines weiteren Mobilfunknetzes verbunden. Diese Ausführungsform bietet den Vorteil, dass zwischen den Steuereinrichtungen von Mobilfunknetzen unterschiedlicher Netzbetreiber Steuerinformationen ausgetauscht werden können. Hierdurch kann der Steuereinrichtung des weiteren Mobilfunknetzes beispielsweise mitgeteilt werden, nach welchen Kriterien sie für mobile Endgeräte von Nutzern des Mobilfunknetzes die endgerätseitige und die netzseitige Entscheidungseinrichtung steuern soll. Konkret können die Steuerinformationen beispielsweise besagen, dass bestimmten "Premium"-Nutzer, d. h. Nutzern mit hohen Umsätzen oder einem speziellen Vertrag, mittels der endgerätseitigen Entscheidungseinrichtung eine freie Auswahl des Zugangsnetzes eingeräumt werden soll. Dabei liegt es an der Steuereinrichtung des weiteren Mobilfunknetzes (bzw. seines Netzbetreibers) zu entscheiden, ob die empfangenen Steuerinformationen in dem weiteren Mobilfunknetz - ganz oder teilweise - berücksichtigt werden oder nicht.

Die Erfindung betrifft darüber hinaus ein Verfahren zum Betreiben einer Anordnung mit einem Mobilfunknetz, das ein Kernnetz und mehrere Zugangsnetze zur Anbindung mobiler Endgeräte an das Kernnetz aufweist, sowie mit mindestens einem mobilen Endgerät.

Hinsichtlich des Verfahrens liegt der Erfindung die Aufgabe zugrunde, ein Verfahren anzugeben, bei dem das Auswählen eines von einem mobilen Endgerät zu verwendenden Zugangsnetzes auf flexible und dynamische Art und Weise gesteuert werden kann.

Diese Aufgabe wird erfindungsgemäß gelöst durch ein Verfahren zum Betreiben einer Anordnung mit einem Mobilfunknetz, das ein Kernnetz und mehrere Zugangsnetze zur Anbindung mobiler Endgeräte an das Kernnetz aufweist, sowie mit mindestens einem mobilen Endgerät, wobei das Endgerät eine endgerätseitige Entscheidungseinrichtung zum Auswählen des von dem mobilen Endgerät zu verwendenden Zugangsnetzes und das Mobilfunknetz eine netzseitige Entscheidungseinrichtung zum Auswählen des von dem mobilen Endgerät zu verwendenden Zugangsnetzes aufweist, mit dem folgenden Verfahrensschritt: Steuern der endgerätseitigen und/oder der netzseitigen Entscheidungseinrichtung durch eine im Mobilfunknetz angeordnete Steuereinrichtung, wobei die Steuereinrichtung mindestens eine weitere Entscheidungseinrichtung des Kernnetzes und/oder mindestens eine weitere Entscheidungseinrichtung mindestens eines der Zugangsnetze steuert, wobei die weitere Entscheidungseinrichtung eine Entscheidungseinrichtung zum Auswählen des von dem mobilen Endgerät zu verwendenden Zugangsnetzes ist.

Das erfindungsgemäße Verfahren ist vorteilhaft, da es eine netzseitige Steuerung der endgerätseitigen und der netzseitigen Entscheidungseinrichtung durch die im Mobilfunknetz angeordnete Steuereinrichtung ermöglicht. Damit kann flexibel festgelegt werden, welche der beiden Entscheidungseinrichtungen die Auswahl des von dem mobilen Endgerät zu verwendenden Zugangsnetzes vornehmen soll. Vorteilhafterweise entfällt hierdurch die Notwendigkeit, generell und damit unflexibel festzulegen, ob das Auswählen des zu verwendenden Zugangsnetzes endgerätseitig oder netzseitig erfolgen soll.

Vorzugsweise läuft das erfindungsgemäße Verfahren so ab, dass eine vollständig oder teilweise im Kernnetz des Mobilfunknetzes angeordnete netzseitige Entscheidungseinrichtung und/oder Steuereinrichtung verwendet wird. Die Verwendung einer im Kernnetz des Mobilfunknetzes angeordneten Steuereinrichtung ist bevorzugt, da das Kernnetz mit den verschiedenen Zugangsnetzen des Mobilfunknetzes verbunden ist und hierdurch somit eine zentrale Steuerung ermöglicht wird.

Da die Steuereinrichtung mindestens eine weitere Entscheidungseinrichtung des Kernnetzes und/oder mindestens eine weitere Entscheidungseinrichtung mindestens eines der Zugangsnetze steuert bietet dies den Vorteil, dass netzseitig mehrere Entscheidungseinrichtungen von der Steuereinrichtung gesteuert werden und eine Überlastung einer zentralen Entscheidungseinrichtung, welche die Entscheidungen für alle mobilen Endgeräte treffen muss, vermieden wird.

In einer besonders bevorzugten Ausführungsform des erfindungsgemäßen Verfahrens erfolgt das Steuern der endgerätseitigen und/oder der netzseitigen Entscheidungseinrichtung durch die Steuereinrichtung anhand von konfigurierbaren bzw. programmierbaren Regeln. Wie bereits zuvor im Zusammenhang mit der erfindungsgemäßen Anordnung erläutert, ist die Verwendung von konfigurierbaren bzw. programmierbaren Regeln bevorzugt, da sie ein besonders hohes Maß an Flexibilität und einfacher Anwendbarkeit ermöglicht.

Das erfindungsgemäße Verfahren kann auch derart ausgestaltet sein, dass ein Deaktivierungssignal von der Steuereinrichtung an die endgerätseitige Entscheidungseinrichtung und ein Aktivierungssignal von der Steuereinrichtung an die netzseitige Entscheidungseinrichtung übermittelt wird. Diese Ausführungsform bietet den Vorteil, dass beispielsweise für den Fall, dass Entscheidungen in der Regel von der endgerätseitigen Entscheidungseinrichtung getroffen werden, bei Bedarf situationsabhängig eine Deaktivierung der endgerätseitigen Entscheidungseinrichtung bei gleichzeitiger Aktivierung der netzseitigen Entscheidungseinrichtung vorgenommen werden kann.

Das erfindungsgemäße Verfahren kann weiterhin auch so ablaufen, dass ein Aktivierungssignal von der Steuereinrichtung an die endgerätseitige Entscheidungseinrichtung und ein Deaktivierungssignal von der Steuereinrichtung an die netzseitige Entscheidungseinrichtung übermittelt wird. Diese Ausführungsform ist vorteilhaft, da sie eine Übergabe der Entscheidungshoheit von der netzseitigen Entscheidungseinrichtung an die jeweilige endgerätseitige Entscheidungseinrichtung ermöglicht.

In einer bevorzugten Ausführungsform des erfindungsgemäßen Verfahrens übermittelt die Steuereinrichtung Steuerinformationen an eine Steuereinrichtung eines weiteren Mobilfunknetzes. Entsprechend den Ausführungen im Zusammenhang mit der erfindungsgemäßen Anordnung ermöglicht dies eine Steuerung auch im Falle von Mobilfunknetzen unterschiedlicher Netzbetreiber, d. h. für den Fall, dass der Wechsel des Zugangsnetzes mit dem Wechsel des das mobile Endgerät versorgenden Netzbetreibers einhergeht. Dies ist beispielsweise im Falle des so genannten "Roamings" häufig der Fall, d. h. etwa dann, wenn das mobile Endgerät in einem anderen Land (d. h. bezogen auf das übliche Heimatnetz im Ausland) verwendet wird. Bezüglich der Steuereinrichtung liegt der Erfindung die Aufgabe zugrunde, eine Steuereinrichtung anzugeben, welche eine flexible und dynamische Steuerung des Auswählens eines zu verwendenden Zugangsnetzes ermöglicht.

Diese Aufgabe wird erfindungsgemäß gelöst durch eine Steuereinrichtung in einem Mobilfunknetz, das ein Kernnetz und mehrere Zugangsnetze zur Anbindung mindestens eines mobilen Endgerätes an das Kernnetz aufweist, wobei die Steuereinrichtung Steuermittel aufweist zur Steuerung mindestens einer zum Auswählen des von dem mobilen Endgerät zu verwendenden Zugangsnetzes dienenden endgerätseitigen Entscheidungseinrichtung sowie zur Steuerung einer zum Auswählen des von dem mobilen Endgerät zu verwendenden Zugangsnetzes dienenden netzseitigen Entscheidungseinrichtung im Mobilfunknetz, und die Steuereinrichtung zur Steuerung mindestens einer weiteren Entscheidungseinrichtung des Kernnetzes und/oder mindestens einer weiteren Entscheidungseinrichtung mindestens eines der Zugangsnetze ausgebildet ist, wobei die weitere Entscheidungseinrichtung eine Entscheidungseinrichtung zum Auswählen des von dem mobilen Endgerät zu verwendenden Zugangsnetzes ist.

Die erfindungsgemäße Steuereinrichtung ist bevorzugt, da sie sowohl die Steuerung der endgerätseitigen als auch die Steuerung der netzseitigen Entscheidungseinrichtung ermöglicht.

Die Steuerung mindestens einer weiteren Entscheidungseinrichtung des Kernnetzes und/oder mindestens einer weiteren Entscheidungseinrichtung mindestens eines der Zugangsnetze ist vorteilhaft, da die Steuereinrichtung somit auch eine Vielzahl von Entscheidungseinrichtungen in dem Mobilfunknetz steuern kann. Diese netzseitigen Entscheidungseinrichtungen können jeweils unmittelbar mit der Steuereinrichtung verbunden sein oder aber in einer hierarchischen Struktur angeordnet sein.

Vorzugsweise ist die erfindungsgemäße Steuereinrichtung derart ausgeprägt, dass die Steuereinrichtung zur Steuerung der endgerätseitigen und der netzseitigen Entscheidungseinrichtung anhand von programmierbaren bzw. konfigurierbaren Regeln ausgebildet ist. Entsprechen den vorherigen Ausführungen ist die Verwendung von programmierbaren bzw. konfigurierbaren Regeln aufgrund der hierdurch bereitgestellten Flexibilität und der Möglichkeit schnell und einfach Änderungen bzw. Erweiterungen zu berücksichtigen, bevorzugt.

In einer bevorzugten Ausführungsform ist die erfindungsgemäße Steuereinrichtung zum Übermitteln von Aktivierungs- beziehungsweise Deaktivierungssignalen an die endgerätseitige und/oder netzseitige Entscheidungseinrichtung ausgebildet. Vorteilhafterweise kann die Steuereinrichtung somit situationsabhängig festlegen, ob die Auswahlentscheidungen endgerätseitig oder netzseitig getroffen werden sollen.

Vorzugsweise weist die erfindungsgemäße Steuereinrichtung Mittel zum Verbinden mit einer weiteren Steuereinrichtung eines weiteren Mobilfunknetzes auf. Hierdurch wird vorteilhafterweise eine Informationsübertragung zwischen den Steuereinrichtungen der beiden Mobilfunknetzen ermöglicht.

Zur weiteren Erläuterung der Erfindung zeigt
- Figur 1: in einer schematischen Skizze ein Ausführungs- beispiel der erfindungsgemäßen Anordnung mit einem Ausführungsbeispiel des erfindungsgemä- ßen mobilen Endgerätes und einem Ausführungs- beispiel der erfindungsgemäßen Steuereinrich- tung und
- Figur 2: ein zweites Ausführungsbeispiel der erfin- dungsgemäßen Anordnung mit einem Ausführungs- beispiel des erfindungsgemäßen mobilen Endge- rätes und einem Ausführungsbeispiel der erfin- dungsgemäßen Steuereinrichtung.

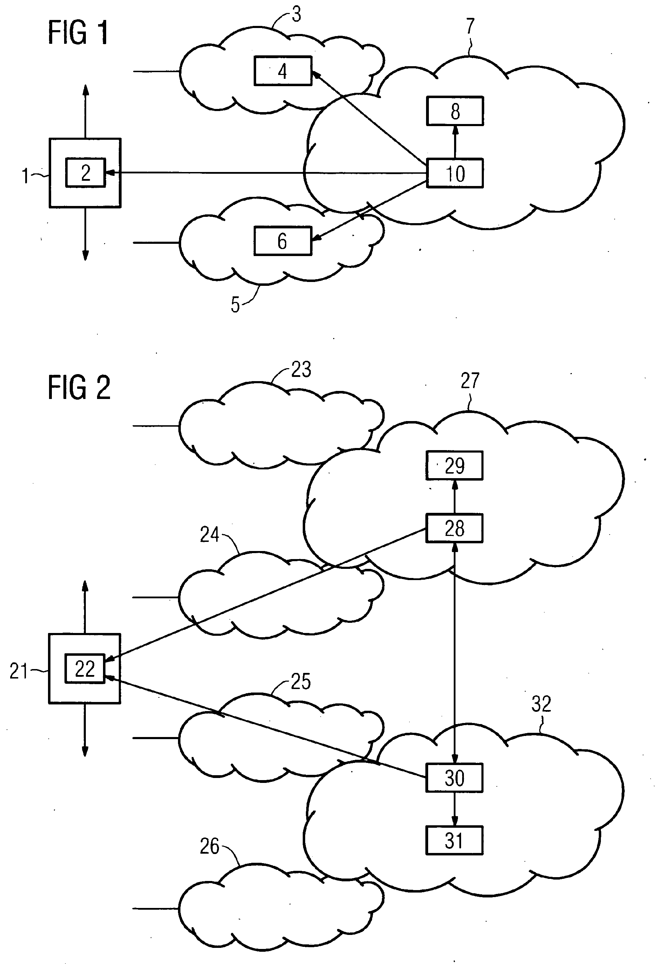

Figur 1 zeigt in schematischer Form ein Ausführungsbeispiel der erfindungsgemäßen Anordnung. Dargestellt ist ein mobiles Endgerät 1, welches eine endgerätseitige Entscheidungseinrichtung 2 aufweist. Des Weiteren ist ein Zugangsnetz 3, welches eine netzseitige Entscheidungseinrichtung 4 aufweist, sowie ein Zugangsnetz 5, welches eine netzseitige Entscheidungseinrichtung 6 aufweist, dargestellt. Die beiden Zugangsnetze 3 und 5, bei denen es sich um solche nach einem beliebigen Funkstandard, wie beispielsweise dem GPRS (General Paket Radio Service)-, dem UMTS (Universal Mobile Telecommunication System), dem GSM (Global System for Mobile Communications)-, dem CDMA (Code Division Multiple Access)-, oder dem WLAN (Wireless Local Area Network)-Standard handeln kann, sind mit einem Kernnetz 7 verbunden und bilden mit diesem zusammen ein Mobilfunknetz.

Das Kernnetz 7 weist eine netzseitige Entscheidungseinrichtung 8 sowie eine Steuereinrichtung 10 auf. Die Steuereinrichtung 10 ist mit den netzseitigen Entscheidungseinrichtungen 4, 6 und 8 verbunden und kann an die endgerätseitige Entscheidungseinrichtung 2 Signalisierungs- bzw. Steuernachrichten senden. Dies geschieht über eines der beiden Zugangsnetze 3 und 5, wobei aus Gründen der Übersichtlichkeit in Figur 1 eine direkte Verbindung zwischen der Steuereinrichtung 10 und dem mobilen Endgerät 1 eingezeichnet ist. Generell sei angemerkt, dass in Figur 1 lediglich die für die Erläuterung der Erfindung wichtigsten Verbindungen zwischen den verschiedenen Komponenten angedeutet sind, wobei die Pfeile andeuten, dass eine Steuerung von Seiten der Steuereinrichtung 10 erfolgt.

Sofern das mobile Endgerät 1 nun, wie durch die dicken vertikalen Pfeile angedeutet, beispielsweise seinen geographischen Ort ändert, so verlässt das mobile Endgerät 1 möglicherweise die geographische Abdeckung des von ihm aktuell genutzten Zugangsnetzes, welches in der Figur 1 nicht dargestellt sein soll. In dieser Situation besteht die Notwendigkeit, dass durch beziehungsweise für das mobile Endgerät 1 eine Auswahl des zu verwendenden Zugangsnetzes aus der Menge der beiden grundsätzlich zur Verfügung stehenden Zugangsnetze 3 und 5 vorgenommen wird. Alternativ könnte auch die Situation vorliegen, dass das mobile Endgerät 1 soeben eingeschaltet worden ist und aus diesem Grund eine Auswahl eines der Zugangsnetze 3 und 5 erforderlich ist. Weitere Szenarien, die zu einer Auswahl eines von mehreren zur Verfügung stehenden Zugangsnetze führen, sind denkbar, wie beispielsweise das Starten eines Dienstes für den das aktuell verwendete Zugangsnetz aufgrund seiner Eigenschaften ungeeignet ist.

Die Auswahl des zu verwendenden Zugangsnetzes kann grundsätzlich sowohl von der endgerätseitigen Entscheidungseinrichtung 2 als auch von einer der netzseitigen Entscheidungseinrichtungen 4, 6 oder 8 getroffen werden. Dabei hängt es von der jeweiligen Situation und den gegebenen Randbedingungen ab, ob eine endgerätseitige oder eine netzseitige Entscheidung zu bevorzugen ist. Die Steuereinrichtung 10 ermöglicht es nun, dynamisch festzulegen, ob die endgerätseitige Entscheidungseinrichtung 2 oder eine der netzseitigen Entscheidungseinrichtungen 4, 6 oder 8 die Auswahl des Zugangsnetzes übernehmen soll. Dabei kann die Steuereinrichtung 10 gegebenenfalls weiterhin festlegen, welche der netzseitigen Entscheidungseinrichtungen 4, 6 oder 8 die Auswahlentscheidung treffen soll. Dabei wird die Steuereinrichtung 10 durch konfigurierbare beziehungsweise programmierbare Regeln gesteuert. So kann die Steuereinrichtung 10 beispielsweise individuelle Regeln für jedes mobile Endgerät (z. B. 1) beziehungsweise für dessen Nutzer verwenden. Darüber hinaus können auch Regeln definiert werden, die für alle mobile Endgeräte oder eine vorbestimmte Auswahl von mobilen Endgeräten gelten wie z. B. für solche, die sich in einem vorbestimmten Aufenthaltsgebiet aufhalten. Dabei sind die Regeln in einer in Figur 1 nicht dargestellten, der Steuereinrichtung 10 zugeordneten Speichereinrichtung abgelegt.

Verschiedenste Szenarien sind denkbar, die dazu führen können, dass die Steuereinrichtung 10 steuernd auf die Entscheidungseinrichtungen 2, 4, 6, 8 einwirkt. So kann beispielsweise von Seiten des Netzbetreibers definiert sein, dass im Standardfall jedes mobile Endgerät selbst das von ihm verwendete Zugangsnetz auswählen dürfen soll. In diesem Fall trifft die Entscheidungseinrichtung 2 des mobilen Endgerätes 1 die entsprechende Entscheidung beispielsweise basieren auf für das mobile Endgerät 1 definierten Regeln, welche etwa in einer Speichereinrichtung des mobilen Endgerätes 1 abgelegt sein können. Dabei kann es sich bei der Speichereinrichtung um einen festen Bestandteil des mobilen Endgerätes 1 oder aber um eine von dem mobilen Endgerät 1 trennbare Speicherkarte etwa in Form einer für die Personalisierung von mobilen Endgeräten verwendeten SIM (Subscriber Identity Module)-Karte handeln.

Eine Regel kann beispielsweise festlegen, dass das Zugangsnetz mit den niedrigsten Kosten, der höchsten Datenübertragungsrate oder der besten Übertragungsqualität ausgewählt werden soll. Darüber hinaus können mit Hilfe der Regeln auch wesentlich komplexere Bedingungen definiert werden. Alternativ könnte der Netzbetreiber des Mobilfunknetzes entscheiden, dass die Mobilitätsentscheidung (d. h. die Auswahl der zu verwendenden Zugangsnetzes) für das mobile Endgerät 1 (bzw. alle mobilen Endgeräte, die das Mobilfunknetz nutzen) netzseitig getroffen werden soll. In diesem Fall würde die Steuereinrichtung 10 des Kernnetzes 7 an die endgerätseitige Entscheidungseinrichtung 2 des mobilen Endgerätes 1 ein Deaktivierungssignal senden und gleichzeitig ein Aktivierungssignal beispielsweise an die netzseitige Entscheidungseinrichtung 8 im Kernnetz 7 des Mobilfunknetzes senden. Hierdurch wird erreicht, dass von einer endgerätseitigen Auswahl des verwendeten Zugangsnetzes auf eine netzseitige Auswahl umgeschaltet wird. Die netzseitige Entscheidungseinrichtung 8 kann dabei die Entscheidshoheit - falls ihr dies von der Steuereinrichtung 10 gestattet worden ist - an die in den Zugangsnetzen 3 und 5 angeordneten netzseitigen Entscheidungseinrichtungen 4 und 6 delegieren. In diesem Fall treffen somit die netzseitigen Entscheidungseinrichtungen 4 und 6 die Entscheidungen hinsichtlich der Auswahl des Zugangsnetzes anhand von den ihnen vorliegenden Regeln. Darüber hinaus können die anzuwendenden Regeln den netzseitigen Entscheidungseinrichtungen 4 und 6 auch von der netzseitigen Entscheidungseinrichtung 8 bzw. der Steuereinrichtung 10 übermittelt werden.

Neben den zuvor beschriebenen Szenarien einer generellen endgerätseitigen Entscheidung über die Auswahl des Zugangsnetzes beziehungsweise einer generellen netzseitigen Auswahl besteht die Möglichkeit weiterer, differenzierterer Vorgehensweisen. So kann beispielsweise im Kernnetz 7 die Information vorliegen, dass in einem bestimmten Gebiet des Mobilfunknetzes eines der Zugangsnetze überlastet ist. In diesem Fall weist die Steuereinrichtung 10 alle mobilen Endgeräte (z. B. 1) in diesem Gebiet und den angrenzenden Gebieten an, ihre endgerätseitige Entscheidungseinrichtung (z. B. 2) zu deaktivieren. Da die netzseitige Entscheidungseinrichtung 8 Informationen zu dem überlasteten Gebiet besitzt, kann sie für die betroffenen mobilen Endgeräte (z. B. 1) Entscheidungen zur Auswahl des Zugangsnetzes derart treffen, dass in dem betroffenen Gebiet das überlastete Zugangsnetz soweit wie möglich vermieden wird. Gleiches gilt beispielsweise für den Fall, dass bei einem der zur Verfügung stehenden Zugangsnetze in einem vorbestimmten Gebiet Wartungsarbeiten getätigt werden. In diesem Fall kann die Steuereinrichtung 10 wiederum die endgerätseitigen Entscheidungseinrichtungen der in dem Gebiet befindlichen mobilen Endgeräte (z. B. 1) abschalten, so dass die netzseitigen Entscheidungseinrichtung 8 für die Zeitdauer der Wartungsarbeiten das entsprechende Zugangsnetz in dem betreffenden Gebiet bei der Auswahl unberücksichtigt lassen kann. Generell können die Steuereinrichtung 10 und die netzseitige Entscheidungseinrichtung 8 vorzugsweise in einer Komponente realisiert werden, wodurch sich die Anordnung vereinfacht.

Darüber hinaus ist es denkbar, dass ein Netzbetreiber zur Vermeidung von Überlastsituationen lediglich bevorzugten Nutzern zu jeder Zeit eine freie Auswahl des Zugangsnetzes gestattet. In diesem Fall kann die Entscheidungseinrichtung 10 die mobilen Endgeräte von nicht solchermaßen bevorzugten Nutzern in Hauptlastzeiten anweisen, ihre endgerätseitigen Entscheidungseinrichtungen abzuschalten.

Weiterhin ist es denkbar, dass der endgerätseitigen Entscheidungseinrichtung 2 beispielsweise ein Satz von Regeln von der

Steuereinrichtung 10 übermittelt wird, welcher die auf dem mobilen Endgerät 1 vorliegenden Regeln überschreibt. Bei den übermittelten Regeln kann es sich beispielsweise um Anweisungen der Art "vermeide in Aufenthaltsgebiet xyz das Zugangsnetz A" oder "bevorzuge UMTS anstatt WLAN" handeln. Diese Anweisungen können dabei auch mit Gültigkeitszeiträumen versehen werden, so dass die mobilen Endgeräte (z. B. 1) außerhalb der betreffenden Zeiträume die Auswahl des Zugangsnetzes weitestgehend autonom vornehmen können.

Des Weiteren ist auch ein statistischer Modus denkbar, bei dem die endgerätseitige Entscheidungseinrichtung 2 angewiesen wird, nur dann selbst die Entscheidung über die Auswahl des Zugangsnetzes zu treffen, wenn eine aus dem Wertebereich 0 bis 10 generierte Zufallszahl beispielsweise einen Wert von größer als 3 aufweist. Ist dies nicht der Fall, so soll die Auswahlentscheidung für das entsprechende mobile Endgerät netzseitig getroffen werden.

Allgemein bietet die Steuereinrichtung 10 somit die Möglichkeit, die Verantwortung für das Auswählen des zu verwendenden Zugangsnetzes zwischen der endgerätseitigen Entscheidungseinrichtung 2 und den netzseitigen Entscheidungseinrichtungen 4, 6 und 8 dynamisch, situationsabhängig und flexibel anzupassen. Hierdurch wird vorteilhafterweise ein sinnvoller und dynamischer Kompromiss zwischen dem Ziel der weitestgehenden Unabhängigkeit des mobilen Endgerätes 1 und einer zentralen Kontrolle der Auswahl des Zugangsnetzes durch das Mobilfunknetz ermöglicht. So kann das mobile Endgerät 1 unter normalen Bedingungen mittels der endgerätseitigen Entscheidungseinrichtung 2 das von ihm zu verwendende Zugangsnetz selbstständig auswählen. Hierdurch wird eine unnötige Signalisierung zwischen dem Mobilfunknetz und dem mobilen Endgerät 1 vermieden. Des Weiteren wird eine hohe Echtzeitfähigkeit sichergestellt, d. h. das mobile Endgerät 1 (und ebenso alle weiteren mobilen Endgeräte, die das Mobilfunknetz nutzen) kann schnellstmöglich auf sich ändernde Netzbedingungen reagieren. Unter bestimmten.Umstanden ist es jedoch vorteilhaft beziehungsweise von grundlegender Bedeutung, dass eine Einflussnahme auf die Auswahl des Zugangsnetzes für das mobile Endgerät 1 netzseitig erfolgen kann. Die Steuereinrichtung 10 ermöglicht es nun, für vorbestimmte mobile Endgeräte (z. B. 1) beispielsweise in ausgewählten Gegenden und unter bestimmten Bedingungen eine netzseitige Auswahl des Zugangsnetzes vorzunehmen. Hierdurch können die Entscheidungen derart getroffen werden, dass sie aus Sicht des Mobilfunknetzes für das Gesamtsystem das bestmögliche Ergebnis liefern.

Figur 2 zeigt ein weiteres Ausführungsbeispiel der erfindungsgemäßen Anordnung. Im Unterschied zu Figur 1 ist hier der Fall dargestellt, dass einem mobilen Endgerät 21, welches eines endgerätseitige Entscheidungseinrichtung 22 aufweist, Zugangsnetze 23, 24, 25 und 26 zweier verschiedener Netzbetreiber, die jeweils ein unabhängiges Kernnetz 27 bzw. 32 aufweisen, nutzen können. Die Kernnetze 27 und 32 der beiden Mobilfunknetze weisen dabei jeweils eine eigene Steuereinrichtung 28 bzw. 30 und eigene netzseitige Entscheidungseinrichtungen 29 und 31 auf.

Um es dem Netzbetreiber des Mobilfunknetzes mit dem Kernnetz 27, mit dem der Nutzer des mobilen Endgerätes 21 eine Vertragsbeziehung besitzt, auch bei der Nutzung eines der beiden anderen Zugangsnetze 25 und 26 durch das mobile Endgerät 21 zu ermöglichen, festzulegen, in welchem Umfang das mobile Endgerät 21 mittels seiner Entscheidungseinrichtung 22 eine selbsttätige Auswahl des Zugangsnetzes vornehmen darf, überträgt die Steuereinrichtung 28 des Mobilfunknetzes mit dem Kernnetz 27 an die Steuereinrichtung 30 des Kernnetzes 32 des Mobilfunknetzes des anderen Netzbetreibers einen Satz von generellen Entscheidungsregeln. Diese Regeln beschreiben das Verhalten, das der Netzbetreiber für mobile Endgeräte seiner Nutzer im Falle des Aufenthalts in dem Mobilfunknetz des anderen Netzbetreibers wünscht. So kann der Netzbetreiber beispielsweise festlegen, dass ein bevorzugter Nutzer auch in diesem Fall zur freien Auswahl des Zugangsnetzes berechtigt sein soll, während dies für andere Nutzer nicht der Fall sein soll. Dabei liegt es letztlich in der Entscheidungshoheit der Steuereinrichtung 30 des Kernnetzes 32 des anderen Netzbetreibers, wie weit die von der Steuereinrichtung 28 übermittelten Regeln beachtet werden.

Es sei darauf hingewiesen, dass in dem Ausführungsbeispiel der Figur 2 jeweils lediglich in den Kernnetzen 27 und 32 eine netzseitige Entscheidungseinrichtung 28 bzw. 30 vorliegt, d. h. die Zugangsnetze 23, 24, 25 und 26 selbst weisen keine weiteren netzseitigen Entscheidungseinrichtungen auf.

## Patentansprüche

1. Anordnung mit einem Mobilfunknetz, das ein Kernnetz (7; 27) und mehrere Zugangsnetze (3, 5; 23-26) zur Anbindung mobiler Endgeräte an das Kernnetz (7; 27) aufweist, sowie mit mindestens einem mobilen Endgerät (1; 21), wobei
- das mobile Endgerät (1; 21) eine endgerätseitige Entscheidungseinrichtung (2; 22) zum Auswählen des von dem mobilen Endgerät (1; 21) zu verwendenden Zugangsnetzes (z. B. 3; 24) und
- das Mobilfunknetz
- eine netzseitige Entscheidungseinrichtung (8; 29) zum Auswählen des von dem mobilen Endgerät (1; 21) zu verwendenden Zugangsnetzes (z. B. 3; 24) sowie
- eine Steuereinrichtung (10; 28) zum Steuern der endgerätseitigen (2; 22) und der netzseitigen Entscheidungseinrichtung (8; 29)
aufweist,
**dadurch gekennzeichnet, dass** das Kernnetz (7) und/oder mindestens eines der Zugangsnetze (3, 5) mindestens eine weitere durch die Steuereinrichtung (10) steuerbare Entscheidungseinrichtung (4, 6) aufweist bzw. aufweisen, wobei die weitere Entscheidungseinrichtung eine Entscheidungseinrichtung zum Auswählen des von dem mobilen Endgerät zu verwendenden Zugangsnetzes ist.

2. Anordnung nach Anspruch 1, **dadurch gekennzeichnet, dass** die netzseitige Entscheidungseinrichtung (8; 29) und/oder die Steuereinrichtung (10; 28) vollständig oder teilweise im Kernnetz (7; 27) des Mobilfunknetzes angeordnet sind.

3. Anordnung nach Anspruch 1 oder 2, **dadurch gekennzeichnet, dass** die endgerätseitige (2; 22) und/oder die netzseitige Entscheidungseinrichtung (8; 29) zum Auswählen des von dem mobilen Endgerät (1; 21) zu verwendenden Zugangsnetzes (z. B. 3; 24) anhand von programmierbaren bzw. konfigurierbaren Regeln ausgebildet ist bzw. sind.

4. Anordnung nach einem der vorhergehenden Ansprüche, **dadurch gekennzeichnet, dass** die Steuereinrichtung (10; 28) zur Steuerung der endgerätseitigen (2; 22) und der netzseitigen (8; 29) Entscheidungseinrichtung anhand von programmierbaren bzw. konfigurierbaren Regeln ausgebildet ist.

5. Anordnung nach einem der vorhergehenden Ansprüche, **dadurch gekennzeichnet, dass** die Steuereinrichtung (10; 28) zum Übermitteln von Aktivierungs- bzw. Deaktivierungssignalen an die endgerätseitige (2; 22) und/oder netzseitige Entscheidungseinrichtung (8; 29) ausgebildet ist.

6. Anordnung nach einem der vorhergehenden Ansprüche, **dadurch gekennzeichnet, dass** die endgerätseitige (2; 22) und/oder die netzseitige Entscheidungseinrichtung (8; 29) zum Auswählen des von dem mobilen Endgerät (2; 22) zu verwendenden Zugangsnetzes (z. B. 3; 24) bei bestehender Anbindung des mobilen Endgerätes (1; 21) an eines der Zugangsnetze (z. B. 5; 23) ausgebildet ist bzw. sind.

7. Anordnung nach einem der vorhergehendem Ansprüche, **dadurch gekennzeichnet, dass** die endgerätseitige (2; 22) und/oder die netzseitige Entscheidungseinrichtung (10; 28) zum Auswählen des von dem mobilen Endgerät (1; 21) zu verwendenden Zugangsnetzes (z.B. 3; 24) bei Einschalten des mobilen Endgerätes (1; 21) ausgebildet ist bzw. sind.

8. Anordnung nach einem der vorhergehenden Ansprüche, **dadurch gekennzeichnet, dass** die Steuereinrichtung (28) mit einer weiteren Steuereinrichtung (30) eines weiteren Mobilfunknetzes verbunden ist.

9. Verfahren zum Betreiben einer Anordnung mit einem Mobilfunknetz, das ein Kernnetz (7; 27) und mehrere Zugangsnetze (3, 5; 23-26) zur Anbindung mobiler Endgeräte an das Kernnetz (7; 27) aufweist, sowie mit mindestens einem mobilen Endgerät (1; 21), wobei das mobile Endgerät (1; 21) eine endgerätseitige Entscheidungseinrichtung (2; 22) zum Auswählen des von dem mobilen Endgerät (1; 21) zu verwendenden Zugangsnetzes (z. B. 3; 24) und das Mobilfunknetz eine netzseitige Entscheidungseinrichtung (8; 29) zum Auswählen des von dem mobilen Endgerät (1; 21) zu verwendenden Zugangsnetzes (z. B. 3; 24) aufweist, mit dem folgenden Verfahrensschritt:
- Steuern der endgerätseitigen (2; 22) und/oder der netzseitigen (8; 29) Entscheidungseinrichtung durch eine im Mobilfunknetz angeordnete Steuereinrichtung (10; 28)
**dadurch gekennzeichnet,**
**dass** die Steuereinrichtung (10) mindestens eine weitere Entscheidungseinrichtung des Kernnetzes (7) und/oder mindestens eine weitere Entscheidungseinrichtung (4, 6) mindestens eines der Zugangsnetze (3, 5) steuert, wobei die weitere Entscheidungseinrichtung eine Entscheidungseinrichtung zum Auswählen des von dem mobilen Endgerät zu verwendenden Zugangsnetzes ist.

10. Verfahren nach Anspruch 9, **dadurch gekennzeichnet, dass** eine vollständig oder teilweise im Kernnetz (7; 27) des Mobilfunknetzes angeordnete netzseitige Entscheidungseinrichtung (8; 29) und/oder Steuereinrichtung (10; 28) verwendet wird.

11. Verfahren nach Anspruch 9 oder 10, **dadurch gekennzeichnet, dass** das Steuern der endgerätseitigen und/oder der netzseitigen Entscheidungseinrichtung durch die Steuereinrichtung (10; 28) anhand von konfigurierbaren bzw. programmierbaren Regeln erfolgt.

12. Verfahren nach einem der Ansprüche 9 bis 11, **gekennzeichnet durch**
- Übermitteln eines Deaktivierungssignals von der Steuereinrichtung (10; 28) an die endgerätseitige Entscheidungseinrichtung (2; 22) und
- Übermitteln eines Aktivierungssignals von der Steuereinrichtung (10; 28) an die netzseitige Entscheidungseinrichtung (8; 29) .

13. Verfahren nach einem der Ansprüche 9 bis 11, **gekennzeichnet durch**
- Übermitteln eines Aktivierungssignals von der Steuereinrichtung (10; 28) an die endgerätseitige Entscheidungseinrichtung (22; 22) und
- Übermitteln eines Deaktivierungssignals von der Steuereinrichtung (10; 28) an die netzseitige Entscheidungseinrichtung (8; 29) .

14. Verfahren nach einem der Ansprüche 9 bis 13, **gekennzeichnet durch** Übermitteln von Steuerinformationen von der Steuereinrichtung (28) an eine Steuereinrichtung (30) eines weiteren Mobilfunknetzes.

15. Steuereinrichtung (10; 28) in einem Mobilfunknetz, das ein Kernnetz (7; 27) und mehrere Zugangsnetze (3, 5; 23-26) zur Anbindung mindestens eines mobilen Endgerätes (1; 21) an das Kernnetz (7; 27) aufweist, wobei die Steuereinrichtung (10; 28) Steuermittel aufweist zur Steuerung mindestens einer zum Auswählen des von dem mobilen Endgerät (1; 21) zu verwendenden Zugangsnetzes dienenden endgerätseitigen Entscheidungseinrichtung (2; 22) sowie zur Steuerung einer zum Auswählen des von dem mobilen Endgerät (1; 21) zu verwendenden Zugangsnetzes (z. B. 3; 24) dienenden netzseitigen Entscheidungseinrichtung (8; 29) im Mobilfunknetz,
**dadurch gekennzeichnet, dass** die Steuereinrichtung (10) zur Steuerung mindestens einer weiteren Entscheidungseinrichtung des Kernnetzes (7) und/oder mindestens einer weiteren Entscheidungseinrichtung (4, 6) mindestens eines der Zugangsnetze (3, 5) ausgebildet ist, wobei die weitere Entscheidungseinrichtung eine Entscheidungseinrichtung zum Auswählen des von dem mobilen Endgerät zu verwendenden Zugangsnetzes ist.

16. Steuereinrichtung nach Anspruch 15, **dadurch gekennzeichnet, dass** die Steuereinrichtung (10; 28) zur Steuerung der endgerätseitigen (2; 22) und der netzseitigen Entscheidungseinrichtung (8; 29) anhand von programmierbaren bzw. konfigurierbaren Regeln ausgebildet ist.

17. Steuereinrichtung nach Anspruch 15 oder 16, **dadurch gekennzeichnet, dass** die Steuereinrichtung (10; 28) zum Übermitteln von Aktivierungs- bzw. Deaktivierungssignalen an die endgerätseitige (2, 22) und/oder netzseitige Entscheidungseinrichtung (8; 29) ausgebildet ist.

18. Steuereinrichtung nach einem der Ansprüche 15 bis 17, **dadurch gekennzeichnet, dass** die Steuereinrichtung (28) Mittel zum Verbinden mit einer weiteren Steuereinrichtung (30) eines weiteren Mobilfunknetzes aufweist.

## Claims

1. Assembly comprising a cellular network which has a core network (7; 27) and a number of access networks (3, 5; 23-26) for connecting mobile terminals to the core network (7; 27), and comprising at least one mobile terminal (1; 21), wherein
- the mobile terminal (1; 21) has a decision unit (2; 22) at the terminal end for selecting the access network (e.g. 3; 24) to be used by the mobile terminal (1; 21), and
- the cellular network has
- a decision unit (8; 29) at the network end for selecting the access network (e.g. 3; 24) to be used by the mobile terminal (1; 21), and
- a control device (10; 28) for controlling the decision unit (2; 22) at the terminal end and the decision unit (8; 29) at the network end,
**characterized in that** the core network (7) and/or at least one of the access networks (3, 5) has or have at least one further decision unit (4, 6) which can be controlled by the control device (10), wherein the further decision unit is a decision unit for selecting the access network to be used by the mobile terminal.

2. Assembly according to Claim 1, **characterized in that** the decision unit (8; 29) at the network end and/or the control device (10; 28) are arranged completely or partially in the core network (7; 27) of the cellular network.

3. Assembly according to Claim 1 or 2, **characterized in that** the decision unit (2; 22) at the terminal end and/or the decision unit (8; 29) at the network end is or are constructed for selecting the access network (e.g. 3; 24) to be used by the mobile terminal (1; 21) by means of programmable or configurable rules.

4. Assembly according to one of the preceding claims, **characterized in that** the control device (10; 28) is constructed for controlling the decision unit (2; 22) at the terminal end and the decision unit (8; 29) at the network end by means of programmable or configurable rules.

5. Assembly according to one of the preceding claims, **characterized in that** the control device (10; 28) is constructed for communicating activation and deactivation signals, respectively, to the decision unit (2; 22) at the terminal end and/or the decision unit (8; 29) at the network end.

6. Assembly according to one of the preceding claims, **characterized in that** the decision unit (2; 22) at the terminal end and/or the decision unit (8; 29) at the network end is or are constructed for selecting the access network (e.g. 3; 24) to be used by the mobile terminal (2; 22) with an existing connection of the mobile terminal (1; 21) to one of the access networks (e.g. 5; 23).

7. Assembly according to one of the preceding claims, **characterized in that** the decision unit (2; 22) at the terminal end and/or the decision unit (10; 28) at the network end is or are constructed for selecting the access network (e.g. 3; 24) to be used by the mobile terminal (1; 21) when the mobile terminal (1; 21) is switched on.

8. Assembly according to one of the preceding claims, **characterized in that** the control device (28) is connected to a further control device (30) of a further cellular network.

9. Method for the operation of an assembly comprising a cellular network which has a core network (7; 27) and a number of access networks (3, 5; 23-26) for connecting mobile terminals to the core network (7; 27), and comprising at least one mobile terminal (1; 21), wherein the mobile terminal (1; 21) has a decision unit (2; 22) at the terminal end for selecting the access network (e.g. 3; 24) to be used by the mobile terminal (1; 21) and the cellular network has a decision unit (8; 29) at the network end for selecting the access network (e.g. 3; 24) to be used by the mobile terminal (1; 21), comprising the following method step:
- controlling the decision unit (2; 22) at the terminal end and/or the decision unit (8; 29) at the network end by means of a control device (10; 28) arranged in the cellular network,
**characterized in that**
the control device (10) controls at least one further decision unit of the core network (7) and/or at least one further decision unit (4, 6) of at least one of the access networks (3, 5), wherein the further decision unit is a decision unit for selecting the access network to be used by the mobile terminal.

10. Method according to Claim 9, **characterized in that** a decision unit (8; 29) and/or control device (10; 28) at the network end, arranged completely or partially in the core network (7; 27) of the cellular network, is used.

11. Method according to Claim 9 or 10, **characterized in that** the decision unit at the terminal end and/or the decision unit at the network end is or are controlled by the control device (10; 28) by means of configurable or programmable rules.

12. Method according to one of Claims 9 to 11, **characterized by**
- communicating a deactivation signal from the control device (10; 28) to the decision unit (2; 22) at the terminal end, and
- communicating an activation signal from the control device (10; 28) to the decision unit (8; 29) at the network end.

13. Method according to one of Claims 9 to 11, **characterized by**
- communicating an activation signal from the control device (10; 28) to the decision unit (2; 22) at the terminal end, and
- communicating a deactivation signal from the control device (10; 28) to the decision unit (8; 29) at the network end.

14. Method according to one of Claims 9 to 13, **characterized by** communicating control information from the control device (28) to a control device (30) of a further cellular network.

15. Control device (10; 28) in a cellular network which has a core network (7; 27) and a number of access networks (3, 5; 23-26) for connecting at least one mobile terminal (1; 21) to the core network (7; 27), wherein the control device (10; 28) has control means for controlling at least one decision unit (2; 22) at the terminal end, used for selecting the access network to be used by the mobile terminal (1; 21), and for controlling a decision unit (8; 29) at the network end, used for selecting the access network (e.g. 3; 24) to be used by the mobile terminal (1; 21), in the cellular network,
**characterized in that** the control device (10) is constructed for controlling at least one further decision unit of the core network (7) and/or at least one further decision unit (4, 6) of at least one of the access networks (3, 5), wherein the further decision unit is a decision unit for selecting the access network to be used by the mobile terminal.

16. Control device according to Claim 15, **characterized in that** the control device (10; 28) is constructed for controlling the decision unit (2; 22) at the terminal end and the decision unit (8; 29) at the network end by means of programmable or configurable rules.

17. Control device according to Claim 15 or 16, **characterized in that** the control device (10; 28) is constructed for communicating activation and deactivation signals, respectively, to the decision unit (2, 22) at the terminal end and/or the decision unit (8; 29) at the network end.

18. Control device according to one of Claims 15 to 17, **characterized in that** the control device (28) has means for connecting to a further control device (30) of a further cellular network.

## Revendications

1. Dispositif comprenant un réseau de téléphonie mobile, qui présente un réseau clé (7 ; 27) et plusieurs réseaux d'accès (3, 5 ; 23-26) pour le rattachement de terminaux mobiles au réseau clé (7 ; 27) et au moins un terminal (1 ; 21) mobile,
- le terminal (1 ; 21) mobile présentant un dispositif de décision côté terminal (2 ; 22) pour la sélection du réseau d'accès (par exemple 3 ; 24) à utiliser par le terminal (1 ; 21) mobile et
- le réseau de téléphonie mobile présentant
- un dispositif de décision (8 ; 29) côté réseau pour la sélection du réseau d'accès (par exemple 3 ; 24) à utiliser par le terminal (1 ; 21) mobile et
- un dispositif de commande (10 ; 28) pour la commande du dispositif de décision côté terminal (2 ; 22) et le dispositif de décision côté réseau (8 ; 29),
**caractérisé en ce que** le réseau clé (7) et/ou au moins l'un des réseaux d'accès (3, 5) présente au moins un autre dispositif de décision (4, 6) pouvant être commandé par le dispositif de commande (10), l'autre dispositif de décision étant un dispositif de décision pour la sélection du réseau d'accès à utiliser par le terminal mobile.

2. Dispositif selon la revendication 1, **caractérisé en ce que** le dispositif de décision (8 ; 29) côté réseau et/ou le dispositif de commande (10 ; 28) est/sont disposé(s) complètement ou en partie dans le réseau clé (7 ; 27) du réseau de téléphonie mobile.

3. Dispositif selon la revendication 1 ou 2, **caractérisé en ce que** le dispositif de décision côté terminal (2 ; 22) et/ou le dispositif de décision côté réseau (8 ; 29) est/sont conçu(s) pour la sélection du réseau d'accès (par exemple 3 ; 24) à utiliser par le terminal (1 ; 21) mobile à l'aide de règles programmables resp. configurables.

4. Dispositif selon l'une quelconque des revendications précédentes, **caractérisé en ce que** le dispositif de commande (10 ; 28) est conçu pour la commande du dispositif de décision côté terminal (2 ; 22) et du dispositif de décision côté réseau (8 ; 29) à l'aide de règles programmables resp. configurables.

5. Dispositif selon l'une quelconque des revendications précédentes, **caractérisé en ce que** le dispositif de commande (10 ; 28) est conçu pour la transmission de signaux d'activation resp. de désactivation au dispositif de décision côté terminal (2 ; 22) et/ou au dispositif de décision côté réseau (8 ; 29).

6. Dispositif selon l'une quelconque des revendications précédentes, **caractérisé en ce que** le dispositif de décision côté terminal (2 ; 22) et/ou le dispositif de décision côté réseau (8 ; 29) est/sont conçu(s) pour la sélection du réseau d'accès (par exemple 3 ; 24) à utiliser par le terminal (2 ; 22) mobile en cas de rattachement existant du terminal (1 ; 21) mobile à l'un des réseaux d'accès (par exemple 5 ; 23).

7. Dispositif selon l'une quelconque des revendications précédentes, **caractérisé en ce que** le dispositif de décision côté terminal (2 ; 22) et/ou le dispositif de décision côté réseau (10 ; 28) est/sont conçu(s) pour la sélection du réseau d'accès (par exemple 3 ; 24) à utiliser par le terminal (1 ; 21) mobile en cas d'enclenchement du terminal (1 ; 21) mobile.

8. Agencement selon l'une quelconque des revendications précédentes, **caractérisé en ce que** le dispositif de commande (28) est relié à un autre dispositif de commande (30) d'un autre réseau de téléphonie mobile.

9. Procédé pour l'exploitation d'un dispositif comprenant un réseau de téléphonie mobile, qui présente un réseau clé (7 ; 27) et plusieurs réseaux d'accès (3, 5 ; 23-26) pour le rattachement de terminaux mobiles au réseau clé (7 ; 27), et au moins un terminal (1 ; 21) mobile, le terminal (1 ; 21) mobile présentant un dispositif de décision côté terminal (2 ; 22) pour la sélection du réseau d'accès (par exemple 3 ; 24) à utiliser par le terminal mobile (1 ; 21) et le réseau de téléphonie mobile présentant un dispositif de décision côté réseau (8 ; 29) pour la sélection du réseau d'accès (par exemple 3 ; 24) à utiliser par le terminal mobile (1 ; 21), comprenant l'étape de procédé suivante :
- commande du dispositif de décision côté terminal (2 ; 22) et/ou du dispositif de décision côté réseau (8 ; 29) par un dispositif de commande (10 ; 28) disposé dans le réseau de téléphonie mobile
**caractérisé en ce que**
le dispositif de commande (10) commande au moins un autre dispositif de décision du réseau clé (7) et/ou au moins un autre dispositif de décision (4, 6) d'au moins l'un des réseaux d'accès (3, 5), l'autre dispositif de décision étant un dispositif de décision pour la sélection du réseau d'accès à utiliser par le terminal mobile.

10. Procédé selon la revendication 9, **caractérisé en ce qu'**un dispositif de décision (8 ; 29) et/ou un dispositif de commande (10 ; 28) côté réseau disposé complètement ou partiellement dans le réseau clé (7 ; 27) du réseau de téléphonie mobile est utilisé.

11. Procédé selon la revendication 9 ou 10, **caractérisé en ce que** la commande du dispositif de décision côté terminal et/ou du dispositif de décision côté réseau s'effectue par le dispositif de commande (10 ; 28) à l'aide de règles configurables resp. programmables.

12. Procédé selon l'une quelconque des revendications 9 à 11, **caractérisé par**
- transmission d'un signal de désactivation du dispositif de commande (10 ; 28) au dispositif de décision (2 ; 22) côté terminal et
- transmission d'un signal d'activation du dispositif de commande (10 ; 28) au dispositif de décision côté réseau (8 ; 29).

13. Procédé selon l'une quelconque des revendications 9 à 11, **caractérisé par**
- transmission d'un signal d'activation du dispositif de commande (10 ; 28) au dispositif de décision côté terminal (2 ; 22) et
- transmission d'un signal de désactivation du dispositif de commande (10 ; 28) au dispositif de décision côté réseau (8 ; 29).

14. Procédé selon l'une quelconque des revendications 9 à 13, **caractérisé par**
- transmission d'informations de commande du dispositif de commande (28) à un dispositif de commande (30) d'un autre réseau de téléphonie mobile.

15. Dispositif de commande (10 ; 28) dans un réseau de téléphonie mobile, qui présente un réseau clé (7 ; 27) et plusieurs réseaux d'accès (3, 5 ; 23-26) pour le rattachement d'au moins un terminal mobile (1 ; 21) au réseau clé (7 ; 27), le dispositif de commande (10 ; 28) présentant des moyens de commande pour la commande d'au moins un dispositif de décision côté terminal (2 ; 22) servant à la sélection du réseau d'accès à utiliser par le terminal mobile (1 ; 21) et pour la commande d'un dispositif de décision côté réseau (8 ; 29) servant à la sélection du réseau d'accès (par exemple 3 ; 24) à utiliser par le terminal mobile (1 ; 21) dans le réseau de téléphonie mobile,
**caractérisé en ce que** le dispositif de commande (10) est conçu pour la commande d'au moins un autre dispositif de décision du réseau clé (7) et/ou au moins d'un autre dispositif de décision (4, 6) d'au moins l'un des réseaux d'accès (3, 5), l'autre dispositif de décision étant un dispositif de décision pour la sélection du réseau d'accès à utiliser par le terminal mobile.

16. Dispositif de commande selon la revendication 15, **caractérisé en ce que** le dispositif de commande (10 ; 28) est conçu pour la commande du dispositif de décision côté terminal (2 ; 22) et du dispositif de décision côté réseau (8 ; 29) à l'aide de règles programmables resp. configurables.

17. Dispositif de commande selon la revendication 15 ou 16, **caractérisé en ce que** le dispositif de commande (10 ; 28) est conçu pour la transmission de signaux d'activation resp. de désactivation au dispositif de décision côté terminal (2, 22) et/ou au dispositif de décision côté réseau (8 ; 29).

18. Dispositif de commande selon l'une quelconque des revendications 15 à 17, **caractérisé en ce que** le dispositif de commande (28) présente des moyens pour la liaison avec un autre dispositif de commande (30) d'un autre réseau de téléphonie mobile.
